# EUROPEAN PATENT APPLICATION

(11) **EP 3 872 323 A1**
(43) Date of publication of application: **01.09.2021**
(21) Application number: 21154896.1
(22) Date of filing: 03.02.2021
(51) Int. Cl.: F02B 37/04, F02B 39/10, F02M 26/05, F02M 26/08, F02M 26/15, F02M 26/23, F02M 26/44, F01N 5/04, F01N 3/00

(54) **ENGINE**

(30) Priority: 25.02.2020 JP 2020029222
(71) Applicant: MAZDA MOTOR CORPORATION, Hiroshima 730-8670 (JP)
(72) Inventor: MATSUMOTO, Takamasa, Fuchu-cho, Aki-gun,, Hiroshima 730-8670 (JP); MIYAWAKI, Hiroki, Fuchu-cho, Aki-gun,, Hiroshima 730-8670 (JP); YAMAGATA, Naoyuki, Fuchu-cho, Aki-gun,, Hiroshima 730-8670 (JP)
(74) Representative: Müller-Boré & Partner Patentanwälte PartG mbB

(57) **Abstract**

An engine with a boosting system is provided, which includes a turbocharger including a compressor provided in an intake passage of the engine and configured to boost intake air to be supplied to the engine, and a turbine provided in an exhaust passage of the engine. The engine includes an electric supercharger provided in the intake passage downstream of the compressor and configured to operate when the engine operates in a low-speed range, an emission control device provided in the exhaust passage upstream of the turbine and configured to purify exhaust gas discharged from the engine, and an EGR system having a passage connecting a part of the intake passage between the compressor and the electric supercharger to a part of the exhaust passage between the emission control device and the turbine, and configured to recirculate a part of the exhaust gas to the intake passage as EGR gas.

## Description

### TECHNICAL FIELD

The present disclosure relates to an engine.

### BACKGROUND OF THE DISCLOSURE

JP2013-189900A discloses an engine with a boosting system. This engine is provided in its exhaust passage with a turbine of a turbocharger. An oxidation catalyst and a diesel particulate filter (DPF) are also disposed in the exhaust passage upstream of the turbine. An intake passage of the engine is provided with a compressor of the turbocharger.

This engine is also provided with a high-pressure exhaust gas recirculation (EGR) pipe and a low-pressure EGR pipe. The high-pressure EGR pipe connects the intake passage downstream of the compressor to the exhaust passage upstream of the DPF. The low-pressure EGR pipe connects the intake passage upstream of the compressor to the exhaust passage downstream of the turbine.

This engine with the boosting system is provided with the oxidation catalyst located closer to the engine than the turbine. Therefore, the temperature of the oxidation catalyst becomes higher. This structure is advantageous for improving emission performance.

On the other hand, since the turbine is provided downstream of the oxidation catalyst and the DPF, the volume upstream of the turbine is large. This large volume lowers a boost response of the turbocharger with respect to an acceleration demanded by a driver accompanying an increase in an accelerator opening.

### SUMMARY OF THE DISCLOSURE

Therefore, the present disclosure is made in view of addressing the situation described above, and one purpose thereof is to provide an engine, which is improved both in emission performance and boost response.

According to one aspect of the present disclosure, an engine or an engine with a boosting system is provided, which includes a turbocharger, including a compressor provided in an intake passage of the engine and configured to boost intake air to be supplied to the engine, and a turbine provided in an exhaust passage of the engine. The engine includes an electric supercharger provided in the intake passage downstream of the compressor and configured to operate when the engine operates in a given speed range or a given low-speed range, an emission control device provided in the exhaust passage upstream of the turbine and configured to purify exhaust gas discharged from the engine, and an exhaust gas recirculation (EGR) system having an EGR passage connecting a part of the intake passage between the compressor and the electric supercharger to a part of the exhaust passage between the emission control device and the turbine, and configured to recirculate a portion of the exhaust gas to the intake passage as EGR gas.

According to this configuration, the emission control device is disposed in the exhaust passage upstream of the turbine of the turbocharger. The temperature of the emission control device is maintained at a high temperature because it is located close to the engine.

In particular, when improving the thermal efficiency of the engine in order to achieve a high fuel efficiency, the exhaust temperature drops. When the exhaust temperature is low, the temperature of the emission control device tends to be low. In this configuration, since the turbine with a high heat capacity is not disposed between the engine and the emission control device, the temperature of the emission control device can be easily risen even when the exhaust temperature is low. The emission control device can be maintained at an active temperature, and thus, it can purify the exhaust gas. As a result, the improvement in fuel efficiency and excellent emission performance of the engine are achieved.

Since the turbine of the turbocharger is provided downstream of the emission control device, the boost response of the turbocharger is low when a driver of a vehicle demands an acceleration of the vehicle. In this respect, according to this configuration, the electric supercharger is provided in the intake passage downstream of the compressor of the turbocharger. The electric supercharger is driven when the engine operates in the given low-speed range.

Since the electric supercharger is driven when the acceleration is demanded by the driver, the boost response of the engine improves. Therefore, this engine is improved both in emission performance and the boost response.

Moreover, when the electric supercharger is driven while the turbocharger is not driven, the pressure in the exhaust passage is low. If connecting an EGR passage to the intake passage downstream of the electric supercharger to supply the EGR gas to the downstream of the electric supercharger, the EGR gas cannot be recirculated to the intake passage.

In this respect, the EGR system according to this configuration connects the EGR passage to the intake passage upstream of the electric supercharger. Even during the operation of the electric supercharger, since the pressure upstream of the electric supercharger is low, the EGR gas can be recirculated to the intake passage through the EGR passage. By this recirculation of the EGR gas, an oxygen concentration inside combustion chambers of the engine decreases, which lowers the combustion temperature. As a result, a generation of hazardous substances (especially NOₓ) is suppressed or reduced.

Moreover, since the EGR passage is connected to the exhaust passage downstream of the emission control device, the EGR system can recirculate exhaust gas purified by the emission control device to the intake passage, as the EGR gas. Accordingly, components of the intake passage can be prevented from being contaminated by a substance in the exhaust gas.

The capacity of a compressor of the electric supercharger may be smaller than that of the compressor of the turbocharger. When the operating state of the engine is in the low-speed range, the electric supercharger can efficiently boost the intake air. The compressor of the turbocharger provided upstream of the electric supercharger is substantially not driven when the operating state of the engine is in the low-speed range.

The electric supercharger may operate at least one of a case when the engine operates in the low-speed range and a vehicle is under acceleration, and a case when the engine operates in a low-speed and high-load range (in a high-load range at the low-speed range). In other words, the electric supercharger may operate in the low-speed range, at least one of a case when the vehicle is under acceleration and a case when the engine operates in a high-load range.

According to this, the electric supercharger can improve the boost response during the acceleration of the vehicle. Moreover, the electric supercharger can sufficiently boost the intake air when the engine operates in the low-speed/high-load range. This is advantageous for improving the torque and emission performance of the engine.

The EGR passage may be a first EGR passage. The EGR system may include a second EGR passage branched from the first EGR passage and connected to a part of the intake passage between the electric supercharger and the engine. The EGR system may recirculate the EGR gas through the first EGR passage when the electric supercharger operates, and recirculate the EGR gas through the second EGR passage when the electric supercharger is inhibited from operating or stopped.

The EGR system recirculates the EGR gas through the first EGR passage when the electric supercharger is driven. Since the first EGR passage is connected to the intake passage upstream of the electric supercharger, the EGR system can recirculate the EGR gas to the intake passage when the electric supercharger is driven as described above. When the electric supercharger is not driven, the EGR system can recirculate the EGR gas to the downstream of the electric supercharger through the second EGR passage.

The first EGR passage may have an EGR cooler provided downstream of the branched part of the second EGR passage, the EGR cooler being configured to cool the EGR gas.

Since the first EGR passage is connected to the exhaust passage upstream of the turbine, the temperature of the EGR gas is comparatively high. The EGR cooler can lower the temperature of EGR gas which is high. The EGR system can recirculate the cooled EGR gas to the intake passage through the first EGR passage.

In particular, when the operating state of the engine is in the low-speed range, and during the acceleration of the vehicle or during the operation at a high load, by recirculating the low-temperature EGR gas to the intake passage through the first EGR passage, the temperature inside the combustion chambers becoming excessively high can be prevented. Thus, an occurrence of an abnormal combustion can be suppressed in the engine.

The second EGR passage can recirculate, to the intake passage, the EGR gas which does not pass through the EGR cooler. That is, the second EGR passage can recirculate the relatively hot EGR gas to the intake passage.

In particular, when a self-ignition type engine operates at a low (light) load and the EGR gas is recirculated to the intake passage through the second EGR passage, the temperature inside the combustion chambers can be increased, and thus, the ignitability of fuel is improved. As a result, the combustion stability of the engine improves.

The EGR system may recirculate the EGR gas in the entire operating range of the engine.

By recirculating the EGR gas to the intake passage when the engine operates at a full load (i.e., at full throttle or a wide open throttle (WOT)), a generation of hazardous substances during the combustion can be suppressed. This is advantageous in improving emission performance.

The emission control device may include a catalytic converter configured to cause a reaction of a hazardous substance in the exhaust gas, and a filter configured to capture particulate matter in the exhaust gas.

The catalytic converter and the filter can purify the exhaust gas discharged from the engine. The EGR passage connected to downstream of the filter can recirculate to the intake passage clean exhaust gas not containing the particulate matter. Accordingly, components of an intake system are not easily contaminated by the particulate matter.

The intake passage may be provided with a bypass passage bypassing the electric supercharger. The bypass passage may be closed when the electric supercharger operates, and opened when the electric supercharger is inhibited from operating or stopped.

According to this, when the electric supercharger is not driven, the intake air can be supplied to the engine through the bypass passage. Thus, the pumping loss of the engine is reduced.

### BRIEF DESCRIPTION OF DRAWINGS

Fig. 1 is a schematic diagram illustrating a configuration of an engine system.
Fig. 2 is a block diagram illustrating a control configuration of an engine.
Fig. 3 is a map illustrating operating ranges of the engine.
Fig. 4 is a diagram illustrating characteristics of a compressor of an electric supercharger.
Fig. 5 is an example of a pressure-volume (P-V) diagram of the engine.
Fig. 6 is a flowchart illustrating an engine control executed by an engine control unit or an electronic control unit (ECU).
Fig. 7 is a diagram illustrating a relationship between a rate of increase in an accelerator opening and a selected mode of a supercharger.

### DETAILED DESCRIPTION OF THE DISCLOSURE

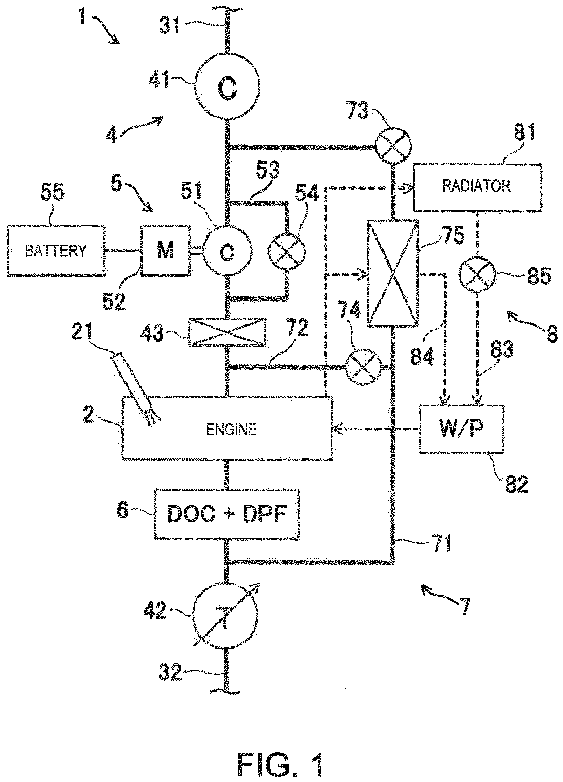

Hereinafter, one embodiment of an engine with a boosting system is described in detail with reference to the accompanying drawings. Fig. 1 illustrates an engine system 1 according to this embodiment. The engine system 1 is mounted on a vehicle (particularly an automobile). An engine 2 of the engine system 1 is a diesel engine to which fuel mainly containing diesel fuel is supplied. Although illustration is omitted, the engine 2 has a plurality of cylinders. Each cylinder forms a combustion chamber of the engine 2. The fuel supplied into the combustion chamber combusts by compression self-ignition.

### (Configuration of Engine System)

The engine 2 is provided with fuel injection valves (i.e., injectors 21). The injectors 21 supply fuel to the engine 2. In detail, the injector 21 is provided to each of the cylinders so as to directly inject fuel therein. The injector 21 receives a control signal from an ECU (Engine Control Unit or Electronic Control Unit) 100 (described later). The injector 21 injects fuel into the cylinder by an amount and at a timing set corresponding to an operating state of the engine 2.

The engine 2 is connected to an intake passage 31. The intake passage 31 supplies intake air to the cylinders. The intake air contains air, or air and EGR (exhaust gas recirculation) gas. The engine 2 is also connected to an exhaust passage 32. The exhaust passage 32 discharges exhaust gas from the cylinders.

In the intake passage 31, a compressor 41 of a turbocharger 4, an electric supercharger 5, and an intercooler 43 are disposed in this order from an upstream side. The compressor 41 boosts the intake air, and the electric supercharger 5 also boosts the intake air. The intercooler 43 cools the boosted intake air. The intercooler 43 is a water-cooled heat exchanger, for example. Although illustration is omitted, the intercooler 43 is connected to a circuit 8 for coolant of the engine 2.

The electric supercharger 5 has a compressor wheel 51 provided inside the intake passage 31, and an electric motor 52 which drives the compressor wheel 51. When the electric motor 52 operates, the compressor wheel 51 rotates and boosts the intake air flowing inside the intake passage 31. The electric supercharger 5 is a supercharger which does not utilize exhaust energy. The electric motor 52 receives power supplied from a battery 55 mounted on the vehicle. The battery 55 accumulates power generated by an alternator (not illustrated), for example.

Here, a capacity of the electric supercharger 5 is smaller than that of the compressor 41 of the turbocharger 4. As described later, the electric supercharger 5 is driven when the engine 2 operates in a low-speed/high-load range, and it is not driven(or it is stopped) in the other ranges. The compressor 41 of the turbocharger 4 with the larger capacity is disposed in series with the electric supercharger 5 with the smaller capacity. The engine 2 can boost the intake air in a wide operating range by switching between driving only the compressor 41 of the turbocharger 4, driving only the electric supercharger 5, and driving both the compressor 41 of the turbocharger 4 and the electric supercharger 5.

The intake passage 31 is provided with a bypass passage 53 which bypasses the compressor wheel 51. An upstream end of the bypass passage 53 is connected to the intake passage 31 between the compressor 41 and the compressor wheel 51. A downstream end of the bypass passage 53 is connected to the intake passage 31 between the compressor wheel 51 and the intercooler 43. The bypass passage 53 is provided with a bypass valve 54 which adjusts an amount of intake air flown through the bypass passage 53. The bypass valve 54 closes when the electric supercharger 5 is driven, and it opens when the electric supercharger 5 is not driven.

In the exhaust passage 32, an emission control device 6 and a turbine 42 of the turbocharger 4 are disposed in this order from the upstream side.

The emission control device 6 includes a diesel oxidation catalyst (DOC) as a catalytic converter, and a diesel particulate filter (DPF) as a filter. Although detailed illustration is omitted, the DOC is disposed upstream of the DPF in the emission control device 6.

The DOC accelerates a reaction in which CO and HC in the exhaust gas are oxidized so as to generate CO2 and H₂O, respectively. Moreover, the DPF captures particulate matter, such as soot, contained in the exhaust gas of the engine 2.

The engine system 1 is not provided with a catalyst which removes NOx contained in the exhaust gas. However, the technology disclosed herein may be applied to an engine having the catalyst which removes NOₓ.

The turbine 42 of the turbocharger 4 rotates by using exhaust energy. A coupling shaft (not illustrated) couples the turbine 42 to the compressor 41. When the turbine 42 rotates in the exhaust passage 32, the compressor 41 rotates in the intake passage 31 so as to boost the intake air.

The turbocharger 4 is particularly a variable-geometry turbocharger (detailed illustration is omitted). Movable vanes are disposed inside a turbine case. A passage area of the turbocharger 4 is changed by adjusting an opening of the movable vanes.

The engine system 1 also includes an EGR (Exhaust Gas Recirculation) system 7. The EGR system 7 recirculates a portion of the exhaust gas to the intake passage 31 as EGR gas. The EGR system 7 includes a first EGR passage 71 and a second EGR passage 72.

The first EGR passage 71 connects a part of the intake passage 31 between the compressor 41 and the electric supercharger 5 to a part of the exhaust passage 32 between the emission control device 6 and the turbine 42. The first EGR passage 71 is provided with a first EGR valve 73. The first EGR valve 73 is an electromagnetic on-off valve, for example. The first EGR valve 73 adjusts a flow rate of the EGR gas recirculated to the intake passage 31 through the first EGR passage 71.

The first EGR passage 71 is also provided with an EGR cooler 75. In Fig. 1, the EGR cooler 75 is provided upstream of the first EGR valve 73 in the flowing direction of the EGR gas. The EGR cooler 75 cools the EGR gas flowing inside the first EGR passage 71. The EGR cooler 75 is a water-cooled heat exchanger, for example. The EGR cooler 75 is connected to the coolant circuit 8. The EGR cooler 75 exchanges heat between the EGR gas and the coolant. Note that a configuration of the circuit 8 will be described later.

The second EGR passage 72 branches from an intermediate part of the first EGR passage 71. In detail, the second EGR passage 72 branches from the first EGR passage 71 upstream of the EGR cooler 75. The second passage 72 is also connected to the intake passage 31 downstream of the electric supercharger 5. In detail, the second EGR passage 72 is connected to a part of the intake passage 31 between the intercooler 43 and the engine 2.

The second EGR passage 72 is provided with a second EGR valve 74. The second EGR valve 74 is an electromagnetic on-off valve, for example. The second EGR valve 74 adjusts a flow rate of the EGR gas recirculated to the intake passage 31 through the second EGR passage 72.

The engine system 1 has the coolant circuit 8. Broken lines in Fig. 1 indicate flowing paths of the coolant, which constitute the circuit 8. The circuit 8 includes a radiator 81, a water pump 82, and an electric thermostatic valve 85.

The circuit 8 has a main passage 83. The main passage 83 is a passage from the engine 2 back to the engine 2 passing through the radiator 81, the electric thermostatic valve 85, and the water pump 82. The water pump 82 recirculates the coolant in the circuit 8. The water pump 82 is driven by the engine 2, for example. The radiator 81 dissipates heat of the coolant which is heated in the engine 2. The electric thermostatic valve 85 opens and closes the main passage 83. The electric thermostatic valve 85 electromagnetically switches its open and close states based on a control signal from the ECU 100 (described later).

The circuit 8 also has a sub passage 84. The sub passage 84 is provided so as to bypass the radiator 81 and the electric thermostatic valve 85. The EGR cooler 75 is provided in the sub passage 84. The coolant flowing inside the sub passage 84 flows from the engine 2 back to the engine 2 passing through the EGR cooler 75 and the water pump 82, but not through the radiator 81.

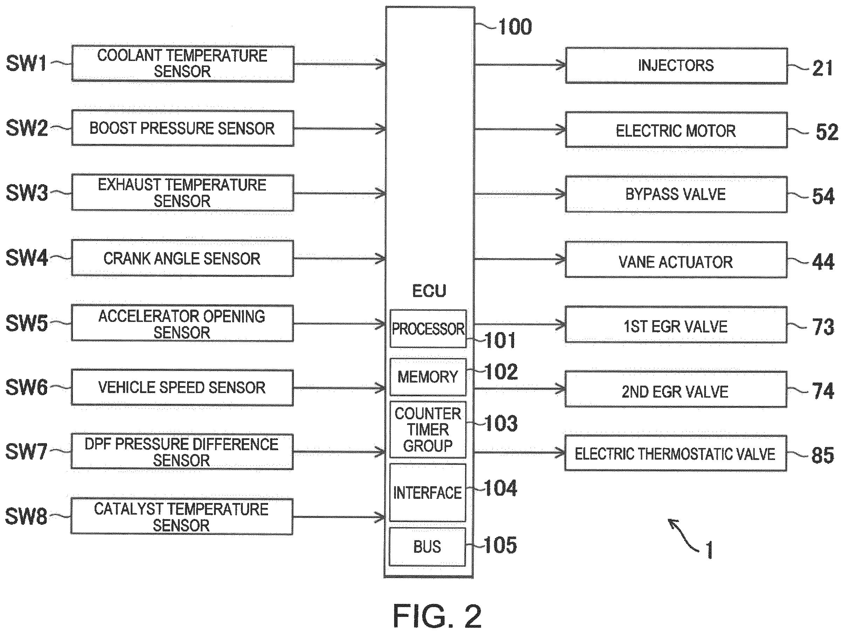

Fig. 2 is a block diagram illustrating a control configuration of the engine system 1. The engine system 1 includes the ECU 100. The ECU 100 is comprised of a microcomputer including a processor (e.g., a central processing unit (CPU)) 101, memory 102, a counter-and-timer group 103, an interface 104, and a bus 105 which connects these units with each other. The ECU 100 controls the engine 2. The ECU 100 is one example of a control unit.

The ECU 100 receives signals from a coolant temperature sensor SW1, a boost pressure sensor SW2, an exhaust temperature sensor SW3, a crank angle sensor SW4, an accelerator opening sensor SW5, a vehicle speed sensor SW6, a DPF pressure difference sensor SW7, and a catalyst temperature sensor SW8.

The coolant temperature sensor SW1 is provided in the circuit 8 and outputs a signal corresponding to the temperature of the coolant of the engine 2. The boost pressure sensor SW2 is provided in the intake passage 31 and outputs a signal corresponding to the boost pressure. The exhaust temperature sensor SW3 is provided in the exhaust passage 32 and outputs a signal corresponding to the exhaust temperature. The crank angle sensor SW4 is attached to the engine 2 and outputs a signal corresponding to a rotational angle of a crankshaft of the engine 2. The accelerator opening sensor SW5 is coupled to an accelerator pedal (not illustrated) and outputs a signal corresponding to an operational amount of the accelerator pedal by a driver of the vehicle. The vehicle speed sensor SW6 is, for example, provided to an axle (not illustrated) and outputs a signal corresponding to a speed of the vehicle. The DPF pressure difference sensor SW7 is attached to the emission control device 6 and outputs a signal corresponding to a pressure difference between an inlet pressure and an outlet pressure of the DPF. The catalyst temperature sensor SW8 is attached to the emission control device 6 and outputs a signal corresponding to the temperature of the DOC.

The ECU 100 calculates an engine speed based on the signal from the crank angle sensor SW4, and calculates an engine load based on the signal from the accelerator opening sensor SW5. Moreover, the ECU 100 determines whether the engine 2 is cold or warm based on the signal from the coolant temperature sensor SW1. The ECU 100 determines whether an acceleration is demanded by the driver, and a magnitude of the demanded acceleration, based on the signal from the accelerator opening sensor SW5.

The ECU 100 also determines whether a DPF regeneration is necessary based on the signal from the DPF pressure difference sensor SW7. The DPF regeneration is to combust the particulate matter accumulated in the DPF. The ECU 100 executes a regeneration control of the DPF if determined that the DPF regeneration is necessary.

The ECU 100 determines the operating state of the engine 2 based on the inputted signals, and outputs control signals to the injectors 21, the electric motor 52, the bypass valve 54, a vane actuator 44, the first EGR valve 73, the second EGR valve 74, and the electric thermostatic valve 85, so as to correspond to the determined operating state. Note that the vane actuator 44 is an actuator which moves the movable vanes of the turbocharger 4.

Air and the EGR gas are introduced into the combustion chambers by an amount corresponding to the operating state of the engine 2, and fuel is also supplied to the combustion chambers. The fuel supplied to the combustion chambers combusts by the compression self-ignition at an appropriate timing.

The engine 2 combusts fuel in excess air in order to improve thermal efficiency. Moreover, an amount of air inside the combustion chambers can be adjusted by introducing the EGR gas into the combustion chambers. The vehicle mounted with this engine system 1 is high in fuel efficiency.

On the other hand, since the thermal efficiency is high in the engine 2, the temperature of the exhaust gas discharged from the combustion chambers is low, which is disadvantageous for an activation of the DOC. In the conventional engine system, the emission control device is generally disposed downstream of the turbine of the turbocharger. Since the heat capacity of the turbine is high in this structure, the temperature of the emission control device is further more difficult to rise when the temperature of the exhaust gas is low.

On the other hand, the engine system 1 has the emission control device 6 disposed upstream of the turbine 42 of the turbocharger 4. Since the turbine 42 is not disposed between the engine 2 and the emission control device 6, the temperature of the emission control device 6 can be easily risen by the exhaust gas and maintained at a high temperature during the operation of the engine 2. This engine system 1 can maintain an active state of the DOC during the operation of the engine 2 even when the temperature of the exhaust gas is low, thereby improving emission performance.

### (Control of Electric Supercharger Executed by ECU)

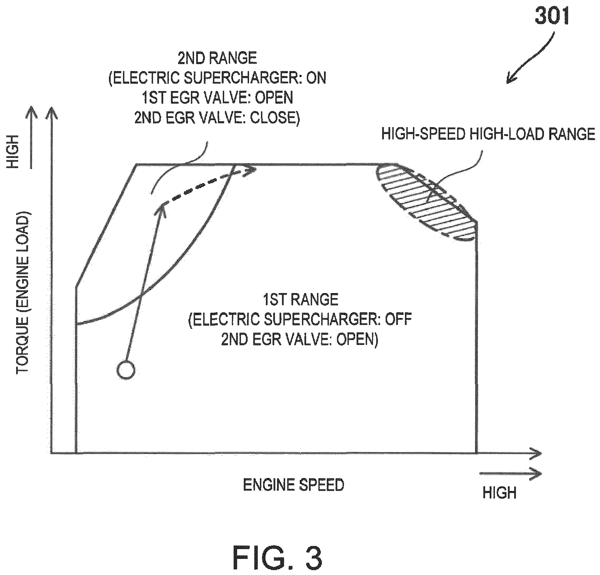

Next, the control of the engine 2 executed by the ECU 100 is described. Fig. 3 illustrates operating ranges of the engine 2. The operating ranges are defined by the engine speed and torque (i.e., the engine load).

Fig. 3 is a map 301 related to the operation of the electric supercharger 5. The ECU 100 drives the electric supercharger 5 in a second range within the entire operating range of the engine 2, and does not drive the electric supercharger 5 in a first range other than the second range.

The second range corresponds to the low-speed/high-load range. The first range particularly has a speed higher than a speed of the second range and/or a load lower than a load of the first range. Here, the low-speed range corresponds to a low-speed range when the entire operating range of the engine 2 is divided into the low-speed range and a high-speed range in a speed axis direction. Alternatively, the low-speed range may correspond to a low-speed range when the entire operating range of the engine 2 is divided into the low-speed range, a middle-speed range, and a high-speed range, in the speed axis direction. The high-load range corresponds to a high-load range when the entire operating range of the engine 2 is divided into a low-load range and the high-load range in a load axis direction. Alternatively, the high-load range may correspond to a high-load range when the entire operating range of the engine 2 is divided into a low-load range, a middle-load range, and the high-load range, in the load axis direction.

When the electric supercharger 5 is driven in the second range, the ECU 100 closes the bypass valve 54. The intake air flows into the engine 2 passing through the compressor wheel 51 of the electric supercharger 5. The compressor wheel 51 boosts the intake air during the operation of the electric supercharger 5.

When the electric supercharger 5 is inhibited from operating or stopped in the first range, the ECU 100 opens the bypass valve 54. The intake air flows into the engine 2 without passing through the compressor wheel 51 of the electric supercharger 5. Thus, an increase in a pumping loss of the engine 2 can be reduced while suspending the operation of the electric supercharger 5.

As described above, the capacity of the compressor wheel 51 of the electric supercharger 5 is smaller than that of the compressor 41 of the turbocharger 4. The electric supercharger 5 has high efficiency in the low-speed range of the engine 2, and thus, it can efficiently boost the intake air in the second range.

Since the capacity of the compressor 41 of the turbocharger 4 is larger, it substantially does not boost the intake air when the engine 2 operates in the second range. The compressor 41 boosts the intake air when the speed of the engine 2 is higher, that is, when the engine 2 operates in the first range. Note that around a border between the first range and the second range, the compressor 41 may boost intake air, and the electric supercharger 5 may further boost the intake air.

Next, a driving scene of the vehicle when the electric supercharger 5 is operated is described. A solid-line arrow and a broken-line arrow in Fig. 3 illustrate changes in the operating state of the engine 2 when the driver steps on the accelerator pedal so as to demand the acceleration of the vehicle. The ECU 100 increases the load of the engine 2 from an operating state indicated by a white circle in Fig. 3 based on the signal from the accelerator opening sensor SW5. Accordingly, the operating state of the engine 2 transitions from the first range to the second range. The ECU 100 operates the electric supercharger 5. Then, the ECU 100 increases the speed of the engine 2. The ECU 100 ends the operation of the electric supercharger 5 when the operating state of the engine 2 transitions from the second range to the first range.

As described above, the emission control device 6 of the engine system 1 is disposed upstream of the turbine 42 of the turbocharger 4. Since the volume upstream of the turbine 42 is large, the boost response of the turbocharger 4 is low when the driver demands an acceleration of the vehicle.

However, since the engine system 1 includes the electric supercharger 5, the ECU 100 can drive the electric supercharger 5 when the acceleration of the vehicle is demanded. As a result, the boost response of the engine 2 improves.

Therefore, the engine system 1 can achieve both improving emission performance by disposing the emission control device 6 upstream of the turbine 42, and improving the boost response by driving the electric supercharger 5 when the acceleration is demanded.

The electric supercharger 5 is driven both when the engine 2 operates in the low-speed range and the vehicle is under acceleration, and when the engine 2 operates in the low-speed/high-load range (in the low-speed and high-load range).

Therefore, as described above, the electric supercharger 5 can improve the boost response during the acceleration of the vehicle. Moreover, since the electric supercharger 5 can sufficiently boost the intake air when the engine 2 operates in the low-speed/high-load range, air and the EGR gas can sufficiently be introduced into the combustion chambers. This is advantageous for improving the torque and the emission performance of the engine 2.

Note that the electric supercharger 5 may be driven in one of a case when the engine 2 operates in the low-speed range and the vehicle is under acceleration, and a case when the engine 2 operates in the low-speed/high-load range.

### (Control of EGR System Executed by ECU)

The ECU 100 recirculates the EGR gas to the intake passage 31 over the entire operating range of the engine 2. That is, the ECU 100 opens the first EGR valve 73 and/or the second EGR valve 74. By recirculating the EGR gas to the intake passage 31 when the engine 2 operates at a full load (i.e., at a full throttle or a wide open throttle (WOT)), an oxygen concentration decreases inside the combustion chambers, which lowers the combustion temperature. A generation of NOₓ is suppressed when the combustion temperature decreases. The electric supercharger 5 allows a large amount of air and the EGR gas to be introduced into the combustion chambers when the engine 2 operates at a low speed and a full load (i.e., when the engine 2 operates in the second range). Thus, the electric supercharger 5 improves the emission performance of the engine 2.

When the electric supercharger 5 is driven, the pressure inside the intake passage 31 is higher on the downstream side of the electrical supercharger 5 than on the upstream side. As described above, since the electric supercharger 5 is driven in the low-speed range of the engine 2, the pressure on the exhaust side of the engine 2 is comparatively small when the electric supercharger 5 is driven. Therefore, the EGR gas cannot be recirculated to the intake passage 31 through the second EGR passage 72 since the pressure on the intake passage 31 side is higher than that on the exhaust passage 32 side.

In this respect, the engine system 1 has the first EGR passage 71. The first EGR passage 71 is connected to the part of the intake passage 31 between the compressor 41 and the electric supercharger 5. Therefore, even when the electric supercharger 5 is driven, the EGR system 7 can recirculate the EGR gas to the intake passage 31 through the first EGR passage 71. The ECU 100 opens the first EGR valve 73 and closes the second EGR valve 74 when the engine 2 operates in the second range as illustrated in Fig. 3, in other words, when the electric supercharger 5 is driven. The EGR gas is recirculated to the intake passage 31 by an amount corresponding to the operating state of the engine 2.

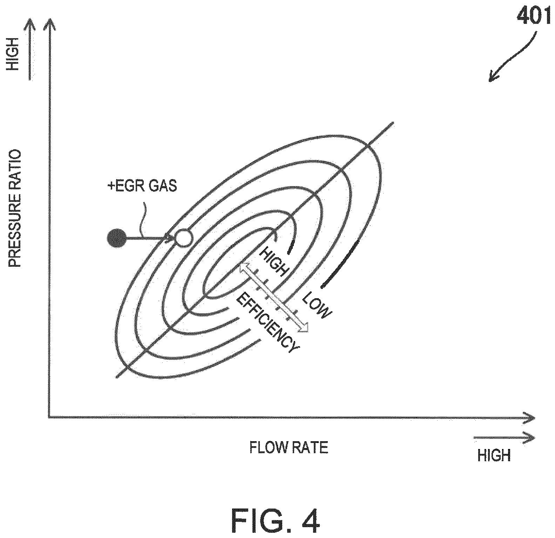

Fig. 4 illustrates a performance curve 401 indicating characteristics of the compressor wheel 51 of the electric supercharger 5. In Fig. 4, a horizontal axis is a flow rate of gas passing through the compressor wheel 51, and a vertical axis is a pressure ratio between an upstream pressure and a downstream pressure of the compressor wheel 51. The performance curve 401 illustrates contour lines indicative of the efficiency of the compressor wheel 51.

As described above, when the EGR gas is recirculated to the intake passage 31 through the first EGR passage 71, the amount of gas flown into the compressor wheel 51 of the electric supercharger 5 becomes a total amount of air and the EGR gas. Here, a black circle in Fig. 4 indicates an operating point of the compressor wheel 51 when the EGR gas is not recirculated to the upstream of the electric supercharger 5. In this case, only air is flown into the compressor wheel 51. Since the electric supercharge 5 is driven in the low-speed range of the engine 2, the flow rate of the intake air passing through the compressor wheel 51 is small. In this case, the efficiency of the compressor wheel 51 is low. On the other hand, a white circle in Fig. 4 indicates an operating point of the compressor wheel 51 when the EGR gas is recirculated to the upstream of the electric supercharger 5. Air and the EGR gas are flown into the compressor wheel 51. That is, the amount of gas passing through the compressor wheel 51 includes the amount of EGR gas. Since the amount of gas passing through the compressor wheel 51 increases, the efficiency of the compressor wheel 51 improves.

Therefore, since the EGR gas is recirculated to the upstream of the electric supercharger 5 through the first EGR passage 71 in the second range where the electric supercharger 5 is driven, the efficiency of the electric supercharger 5 is improved.

Moreover, the EGR cooler 75 is disposed in the first EGR passage 71. Since the EGR cooler 75 cools the EGR gas, the EGR system 7 can recirculate the cooled EGR gas to the intake passage 31 when the load of the engine 2 is high. Therefore, the temperature inside the combustion chambers, into which the EGR gas is introduced, becoming excessively high can be prevented. Thus, an occurrence of abnormal combustion can be suppressed in the engine 2.

The ECU 100 opens the second EGR valve 74 when the electric supercharger 5 is inhibited from driving or stopped (i.e., when the engine 2 operates in the first range). Since the flow rate of the exhaust gas increases as the speed of engine 2 increases, the pressure becomes higher on the exhaust side of the engine 2 than on the intake side. Thus, the EGR gas is recirculated to the intake passage 31 through the second EGR passage 72.

The second EGR passage 72 bypasses the EGR cooler 75. Moreover, since the second EGR passage 72 is connected to the part of the intake passage 31 between the intercooler 43 and the engine 2, the EGR gas is not cooled by the intercooler 43. Furthermore, the EGR gas can be recirculated to the intake passage 31 at a shorter distance through the second EGR passage 72 than through the first EGR passage 71. In addition, the EGR system 7 extracts the EGR gas from the upstream of the turbine 42. Because of these factors, the EGR system 7 can introduce the EGR gas at a comparatively high temperature into the engine 2 through the second EGR passage 72.

When the load of the engine 2 is low, the temperature inside the combustion chambers tends to be lower, which easily decreases the ignitability of the fuel. Since the EGR gas at a high temperature is recirculated to the intake passage 31 through the second EGR passage 72 when the engine 2 operates in the first range at a low (light) load, the temperature inside the combustion chambers can be increased, and thus, the ignitability of fuel is improved. As a result, combustion stability of the engine 2 improves.

Moreover, as indicated by hatching in Fig. 3, when the EGR system 7 recirculates the EGR gas to the intake passage 31 through the second EGR passage 72 while the engine 2 operates in the first range at a high speed and at a full load, the pumping loss of the engine 2 is reduced.

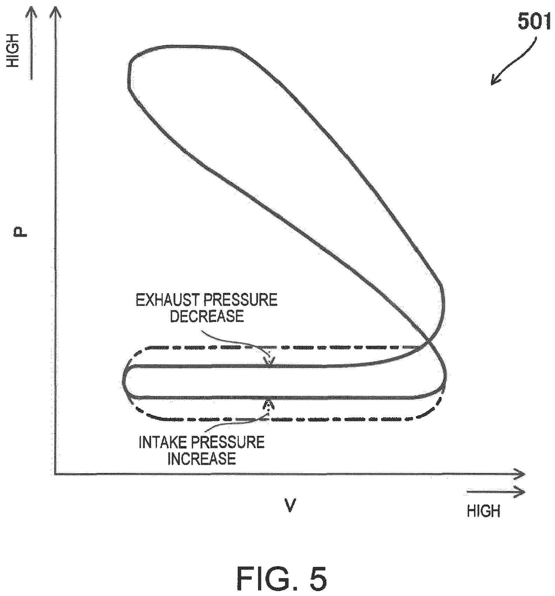

Fig. 5 illustrates a pressure-volume (P-V) diagram 501 of the engine 2. Since the EGR system 7 extracts a portion of the exhaust gas flowing inside the exhaust passage 32 as the EGR gas, an exhaust pressure of the engine 2 decreases. Moreover, since the EGR system 7 introduces the EGR gas into the intake passage 31, an intake pressure of the engine 2 rises. Since the exhaust pressure of the engine 2 drops while the intake pressure rises, a pressure difference between the exhaust pressure and the intake pressure decreases. Therefore, the pumping loss of the engine 2 is reduced.

Moreover, when the engine 2 operates in the high-speed/full-load range, the flow rate of air passing through the compressor 41 is high. If the EGR gas is introduced into the intake passage 31 upstream of the compressor 41 while the flow rate of air passing through the compressor 41 is high, the flow rate becomes excessive, and thus, the efficiency of the compressor 41 decreases. On the other hand, the engine system 1 introduces the EGR gas into the intake passage 31 downstream of the compressor 41 through the second EGR passage 72. Therefore, the engine system 1 also has an advantage of not reducing the efficiency of the compressor 41.

The conventional engine system has two paths of the high-pressure EGR passage and the low-pressure EGR passage. On the other hand, the EGR passage of the engine system 1 is comprised of the first EGR passage 71 and the second EGR passage 72 branched from the first EGR passage 71. That is, the EGR system 7 is comprised of a single path. This configuration is advantageous for simplifying the configuration of the engine system 1.

Moreover, the first EGR passage 71 is connected to the exhaust passage 32 downstream of the emission control device 6. The EGR system 7 can recirculate to the intake passage 31 clean exhaust gas purified by the emission control device 6 as the EGR gas. Accordingly, it can be prevented that components of an intake system are contaminated by the particulate matter etc.

### (Control Executed by ECU during Acceleration Demand)

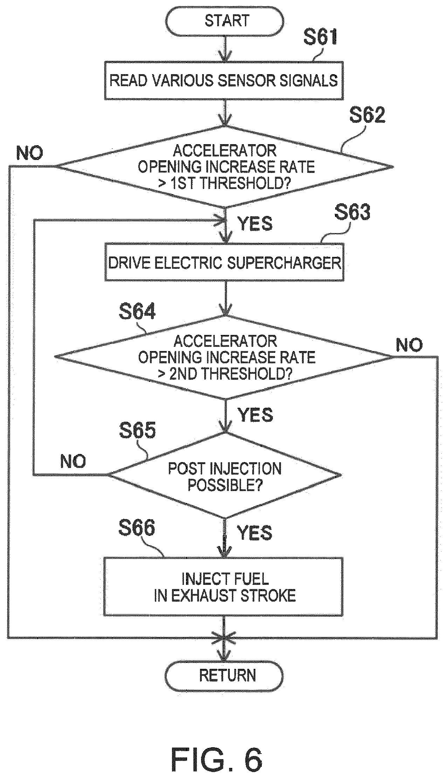

Next, a control of the engine 2 executed by the ECU 100 when the driver demands an acceleration is described. Fig. 6 is a flowchart illustrating process of controlling the engine 2 executed by the ECU 100.

As described above, the ECU 100 drives the electric supercharger 5 when the driver demands an acceleration, thereby improving the boost response of the engine 2. When the demand for the acceleration by the driver is high, the demanded boost pressure may not be achieved only by the electric supercharger 5. In this case, the engine system 1 drives the turbocharger 4.

When driving the turbocharger 4, the engine system 1 uses the emission control device 6 to accelerate the driving of the turbocharger 4. In detail, the engine system 1 causes each injector 21 to inject fuel into the combustion chamber of the engine 2 during an exhaust stroke after a main injection. Note that the injector 21 performs the main injection near a compression top dead center. Since the fuel injection during the exhaust stroke is an injection after the main injection, hereinafter, it may be referred to as a "post injection."

Fuel injected during the exhaust stroke is supplied to the emission control device 6 in an unburned or almost unburned state. The fuel reacts in the DOC of the emission control device 6 so as to generate a reaction heat. This reaction heat increases the exhaust energy supplied to the turbine 42 downstream of the emission control device 6. As a result, the driving of the exhaust turbocharger 4 is accelerated and the boost pressure promptly increases.

As illustrated in the flowchart of Fig. 6, at Step S61, the ECU 100 first reads the signals from various sensors. Then, at Step S62, the ECU 100 determines whether a rate of increase in the accelerator opening is above a given first threshold. The rate of increase in the accelerator opening is detected based on the signal from the accelerator opening sensor SW5. The increasing rate of the accelerator opening corresponds to a speed of the driver depressing the accelerator pedal. The increasing rate of the accelerator opening is high when the depressing speed is high, and the increasing rate of the accelerator opening is low when the depressing speed is low.

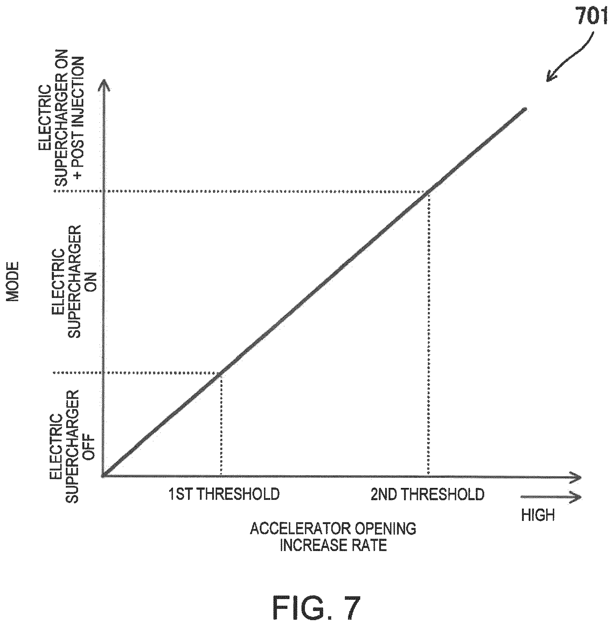

Fig. 7 illustrates a relationship 701 between the increasing rate of the accelerator opening and a selected mode of the electric supercharger 5 and the turbocharger 4. In the relationship 701, the ECU 100 sets the electric supercharger 5 to OFF when the increasing rate of the accelerator opening is below the first threshold. That is, the electric supercharger 5 is not driven. Since the acceleration demanded by the driver is small, the electric supercharger 5 does not boost the intake air. Note that the turbocharger 4 may boost the intake air depending on the operating state of the engine 2.

In the relationship 701, the ECU 100 drives the electric supercharger 5 when the increasing rate of the accelerator opening exceeds the first threshold.

In the relationship 701, when the increasing rate of the accelerator opening exceeds a second threshold, the ECU 100 drives the electric supercharger 5 and injects fuel during an exhaust stroke (i.e., executes the post injection). Note that the second threshold is larger than the first threshold.

Returning to the flowchart of Fig. 6, if the determination at Step S62 is YES, the ECU 100 shifts to Step S63. If the determination at Step S62 is NO, the ECU 100 returns the processing. In this case, the ECU 100 executes a normal engine control without the acceleration control at Steps S63 to S66.

At Step S63, the ECU 100 drives the electric supercharger 5. The electric supercharger 5 promptly boosts the intake air, which improves the boost response of the engine 2.

Next, at Step S64, the ECU 100 determines whether the increasing rate of the accelerator opening exceeds the given second threshold. If the determination at Step S64 is YES, the ECU 100 shifts to Step S65. If the determination at Step S64 is NO, the ECU 100 returns the processing. In this case, the ECU 100 continues the driving of the electric supercharger 5 or transitions to the normal engine control, according to driver's operation of the accelerator pedal.

At Step S65, the ECU 100 determines whether the fuel injection during an exhaust stroke is possible. In detail, the ECU 100 determines whether (1) the temperature of the DOC is above a restrictive temperature, and (2) the temperature of the turbine 42 is above a restrictive temperature.

The ECU 100 can determine the temperature of the DOC based on the signal from the catalyst temperature sensor SW8, for example. The restrictive temperature may be determined in advance in consideration of a reliability of the DOC.

Moreover, the ECU 100 can estimate the temperature of the turbine 42 based on, for example, the signal from the exhaust temperature sensor SW3, and a temperature estimation model of the exhaust passage 32 determined in advance. The restrictive temperature may be determined in advance in consideration of a reliability of the turbine 42.

For example, the memory 102 of the ECU 100 stores information on these restrictive temperatures and the temperature estimation model.

If the determination at Step S65 is YES, the ECU 100 shifts to Step S66. If the determination at Step S65 is NO, the ECU 100 returns to Step S63. Since the post injection is not executed, the reliability of the DOC and/or the turbine 42 is secured.

At Step S66, the ECU 100 causes the injectors 21 to perform the post injection during an exhaust stroke. As described above, the fuel reacts in the DOC of the emission control device 6 so as to generate the reaction heat. This reaction heat increases the exhaust energy supplied to the turbine 42. As a result, the driving of the turbocharger 4 is accelerated. Since the engine system 1 boosts the intake air by both of the compressor 41 of the turbocharger 4 and the electric supercharger 5, the boost pressure can promptly reach the demanded pressure.

As described above, the engine system 1 can realize both improving the boost response and achieving the demanded torque of the engine 2, by using the compressor 41 of the turbocharger 4 and the electric supercharger 5, which are disposed in series.

The present disclosure is not limited to the above embodiment, and may be substituted without departing from the spirit of the appended claims.

For example, the technology disclosed herein may be applied not only to the diesel engine, but to an engine using fuel containing gasoline, naphtha, etc.

The embodiment described above is merely illustration, and should not be interpreted to limit the scope of the present disclosure. The scope of the present disclosure is defined by the appended claims, and all modifications and changes which fall within the range of the claims are intended to be embraced within the present disclosure.

### DESCRIPTION OF REFERENCE CHARACTERS

1 Engine System
2 Engine
31 Intake Passage
4 Turbocharger
41 Compressor
42 Turbine
5 Electric Supercharger
53 Bypass Passage
6 Emission Control Device
7 EGR System
71 First EGR Passage
72 Second EGR Passage
75 EGR Cooler

## Claims

1. An engine (2), comprising:
a turbocharger (4), including:
a compressor (41) provided in an intake passage (31) of the engine (2) and configured to boost intake air to be supplied to the engine (2); and
a turbine (42) provided in an exhaust passage (32) of the engine (2);
an electric supercharger (5) provided in the intake passage (31) downstream of the compressor (41) and configured to operate when the engine (2) operates in a given speed range;
an emission control device (6) provided in the exhaust passage (32) upstream of the turbine (42) and configured to purify exhaust gas discharged from the engine (2); and
an EGR system (7) having an EGR passage connecting a part of the intake passage (31) between the compressor (41) and the electric supercharger (5) to a part of the exhaust passage (32) between the emission control device (6) and the turbine (42), and configured to recirculate a portion of the exhaust gas to the intake passage (31) as EGR gas.

2. The engine (2) of claim 1, wherein the electric supercharger (5) is configured to operate in at least one of a case when the engine (2) operates in the given speed range and a vehicle is under acceleration, and a case when the engine (2) operates in the given speed range and in a given load range.

3. The engine (2) of claim 2, wherein the given load range is a high-load range.

4. The engine (2) of any one of the preceding claims, wherein the given speed range is a low-speed range.

5. The engine (2) of any one of the preceding claims,
wherein the EGR passage is a first EGR passage (71),
wherein the EGR system (7) includes a second EGR passage (72) branched from the first EGR passage (71) and connected to a part of the intake passage (31) between the electric supercharger (5) and the engine (2), and
wherein the EGR system (7) is configured to recirculate the EGR gas through the first EGR passage (71) when the electric supercharger (5) operates, and/or configured to recirculate the EGR gas through the second EGR passage (72) when the electric supercharger (5) is inhibited from operating or stopped.

6. The engine (2) of claim 5, wherein the first EGR passage (71) has an EGR cooler (75) provided downstream of the branched part of the second EGR passage (72), the EGR cooler (75) being configured to cool the EGR gas.

7. The engine (2) of any one of the preceding claims, wherein the EGR system (7) is configured to recirculate the EGR gas in the entire operating range of the engine (2).

8. The engine (2) of any one of the preceding claims, wherein the emission control device (6) includes a catalytic converter configured to cause a reaction of a substance in the exhaust gas, and a filter configured to capture particulate matter in the exhaust gas.

9. The engine (2) of claim 8, wherein the substance is a hazardous substance.

10. The engine (2) of any one of the preceding claims, wherein the intake passage (31) is provided with a bypass passage (53) bypassing the electric supercharger (5), the bypass passage (53) being closed when the electric supercharger (5) operates, and being opened when the electric supercharger (5) is inhibited from operating or stopped.

11. The engine (2) of any one of the preceding claims, wherein
the engine (2) is a diesel engine.

12. The engine (2) of any one of the preceding claims, wherein
the electric supercharger (5) has a compressor wheel (51) provided inside the intake passage (31), and an electric motor (52) configured to drives the compressor wheel (51).

13. The engine (2) of any one of the preceding claims, wherein
the electric supercharger (5) is configured to be stopped in a higher speed range, and
a speed of the higher speed range is higher than a speed of the given speed range.

14. The engine (2) of any one of the preceding claims, wherein
the electric supercharger (5) is configured to be stopped in a lower load range at the given speed range,
the electric supercharger (5) is configured to be operated in a higher load range at the given speed range, and
a load of the lower load range is lower than a load of the higher load range.

15. An engine system (1) or a vehicle comprising the engine (2) of any one of the preceding claims.
